# EUROPEAN PATENT APPLICATION

(11) **EP 4 567 071 A1**
(43) Date of publication of application: **11.06.2025**
(21) Application number: 23850131.6
(22) Date of filing: 02.08.2023
(51) Int. Cl.: C08L 67/04, C08G 63/06

(54) **EMULSION**

(30) Priority: 03.08.2022 JP 2022124311
(71) Applicant: Kuraray Co., Ltd., Kurashiki-shi, Okayama 710-0801 (JP)
(72) Inventor: FUKUHARA, Tadahito, Tsukuba-shi, Ibaraki 305-0841 (JP); SAKON, Kazuki, Tsukuba-shi, Ibaraki 305-0841 (JP); KONISHI, Hiroyuki, Tsukuba-shi, Ibaraki 305-0841 (JP); TOSHINARI, Kenta, Tokyo 100-0004 (JP)
(74) Representative: D Young & Co LLP
(86) International application number: PCT/JP2023/028328
(87) International publication number: WO 2024/029578

(57) **Abstract**

An emulsion containing a block copolymer (I) and a dispersant (II), wherein the block copolymer (I) contains a block structural unit (A) containing a polylactic acid unit (a) as a main component and a block structural unit (B) containing a polyester unit (b) as a main component.

## Description

### Technical Field

The present invention relates to an emulsion having excellent biodegradability.

### Background Art

From the viewpoint of environmental protection, biodegradable resins that are plastics that are involved in biomass formation by organisms such as microorganisms in the natural world, then finally decomposed into water and carbon dioxide, and return to nature, and can also reduce the generation of carbon dioxide are actively developed.

In order to apply biodegradable resins to a wide range of fields, such as paints, adhesives, printing, textiles, and films, techniques to micronize biodegradable resins and dispersions in which micronized biodegradable resins are dispersed are also actively developed.

As such techniques, for example, Patent Literatures 1 to 3 have been proposed. Patent Literature 1 discloses particles of a biodegradable polyester resin such as a polylactic acid resin and a production method thereof. Patent Literature 2 discloses an aqueous dispersion of a hydrolysis unstable polymer substantially free of a volatile organic compound, wherein the hydrolysis unstable polymer contains a biodegradable polymer. Patent Literature 3 discloses a biodegradable resin aqueous dispersion in which a biodegradable resin is dispersed in water, containing a specific polyvinyl alcohol as a dispersant.

### Citation List

### Patent Literature

PTL 1: JP 2005-2302 A
PTL 2: JP 2019-507229 W
PTL 3: JP 2004-99883 A

### Summary of Invention

### Technical Problem

Presumably, the particles of the biodegradable resins and the dispersions in which the biodegradable resins are dispersed, described in Patent Literatures 1 to 3, have a certain degree of biodegradability. However, from the rise of the environmental consciousness, one having better biodegradability has been required.

Accordingly, an object of the present invention is to provide an emulsion having excellent biodegradability.

### Solution to Problem

As a result of intensive studies to solve the above problem, the present inventors have conceived the following present invention and found that the problem can be solved.

That is, the present invention is as follows.

[1] An emulsion containing a block copolymer (I) and a dispersant (II), wherein the block copolymer (I) contains a block structural unit (A) containing a polylactic acid unit (a) as a main component and a block structural unit (B) containing a polyester unit (b) as a main component.
[2] The emulsion according to [1] above, wherein the block copolymer (I) is 50% by mass or more and 99% by mass or less based on a total of 100% by mass of the block copolymer (I) and the dispersant (II).
[3] The emulsion according to [1] or [2] above, wherein the polyester unit (b) contains a unit derived from an aliphatic diol (b1) and an aliphatic dicarboxylic acid (b2), and the aliphatic diol (b1) is a diol having an alkyl group as a branched chain.
[4] The emulsion according to [3] above, wherein the aliphatic diol (b1) has 10 or less carbon atoms.
[5] The emulsion according to [3] or [4] above, wherein the aliphatic diol (b1) has 5 or more carbon atoms.
[6] The emulsion according to any one of [3] to [5] above, wherein the branched chain of the aliphatic diol (b1) is a methyl group.
[7] The emulsion according to any one of [1] to [6] above, wherein the block structural unit (A) is 5% by mass or more and 95% by mass or less based on a total of 100% by mass of the block structural unit (A) and the block structural unit (B).
[8] The emulsion according to any one of [1] to [7] above, wherein the dispersant (II) is a vinyl alcohol polymer.
[9] The emulsion according to any one of [1] to [8] above, having a particle size of 100 to 1,000 nm.
[10] A method for producing the emulsion according to any one of [1] to [9] above, including the step of:
   dispersing the block copolymer (I) dissolved in an organic solvent in an aqueous medium in presence of the dispersant (II).
[11] The method for producing the emulsion according to [10] above, further including the step of:
   removing the organic solvent.

### Advantageous Effects of Invention

According to the present invention, an emulsion having excellent biodegradability can be provided.

### Description of Embodiments

Hereinafter, the description will be made based on an example of an embodiment of the present invention. However, the embodiments described below are illustrative for embodying the technological thought of the present invention, and the present invention is not limited to the following descriptions.

In the present specification, though preferred forms of embodiments are shown, combinations of two or more of the preferred forms are also preferred forms. When there are several numerical ranges for the matters indicated in a numerical range, a lower limit and an upper limit thereof can be selectively combined to form a preferred form. When there is a description of a numerical range of "XX to YY", "XX to YY" means "XX or more and YY or less".

In the present specification, "~ unit" (where "~" indicates a polymer) means " structural unit derived from ~". For example, "polylactic acid unit" means "structural unit derived from polylactic acid" and "polyester unit" means "structural unit derived from a polyester".

In the present specification, unless otherwise noted, the "main chain" of a polymer means the longest molecular chain in the polymer molecule.

In the present invention, the "solid" means that there is no fluidity at room temperature (23°C) and without pressure.

### [Emulsion]

The emulsion of the present embodiment contains a block copolymer (I) and a dispersant (II). The block copolymer (I) contains a block structural unit (A) containing a polylactic acid unit (a) as a main component and a block structural unit (B) containing a polyester unit (b) as a main component.

The present inventors have conducted various studies on formulations for imparting excellent biodegradability to an emulsion. As a result, the present inventors have found that an emulsion containing a block copolymer (I) containing a block structural unit (A) and a block structural unit (B); and a dispersant (II) is an effective formulation for achieving excellent biodegradability.

### <Block copolymer (I)>

The block copolymer (I) contains a block structural unit (A) containing a polylactic acid unit (a) as a main component and a block structural unit (B) containing a polyester unit (b) as a main component. By the polylactic acid unit (a) being contained, the melting point can be easily adjusted to room temperature or more, and the handling property of the block copolymer (I) is improved. By the block structural unit (B) containing a polyester unit (b) as a main component being contained, the biodegradability and hydrolysis resistance of the block copolymer (I) is improved.

### <<Block structural unit (A)>>

### <Polylactic acid unit (a)>

The block structural unit (A) contains a polylactic acid unit (a) as a main component.

The "main component" means the unit with the highest content percentage among the units that constitute the block structural unit (A).

The content percentage of the polylactic acid unit (a) in the block structural unit (A) is preferably 70% by mass or more, more preferably 80% by mass or more, further preferably 85% by mass or more, even further preferably 90% by mass or more, and can be 100% by mass. There is no limit on the upper limit of the polylactic acid unit (a) contained in the block structural unit (A), and the upper limit is, for example, 100% by mass or less.

The polylactic acid that constitutes the polylactic acid unit (a) can be adjusted by the direct condensation method of lactic acid, or can be adjusted by the ring-opening polymerization method of lactide. As the lactic acid, for example, at least one selected from the group consisting of L-lactic acid, D-lactic acid, and DL-lactic acid can be used. As the lactide, for example, at least one selected from the group consisting of L-lactide, D-lactide, DL-lactide, and meso-lactide can be used.

As the polylactic acid, a stereocomplex polylactic acid obtained by mixing poly-L-lactic acid, poly-D-lactic acid, poly-DL-lactic acid, or poly-L-lactic acid and poly-D-lactic acid can be used. From the viewpoint of cost, availability of raw materials, and the handling property of the block copolymer (I), the polylactic acid is preferably poly-L-lactic acid, poly-D-lactic acid, and poly-DL-lactic acid, and poly-L-lactic acid and poly-D-lactic acid are more preferable.

Meanwhile, from the viewpoint of cost and complexity of synthesis, the polylactic acid is preferably not a stereocomplex polylactic acid.

From the viewpoint of exhibition of even better biodegradability, the block structural unit (A) preferably contains 70% by mass or more, more preferably contains 80% by mass or more, and further preferably contains 90% by mass or more of a structural unit derived from poly-L-lactic acid or a structural unit derived from poly-D-lactic acid. For example, in an example of a preferred embodiment, the block structural unit (A) is composed of a structural unit derived from poly-L-lactic acid or a structural unit derived from poly-D-lactic acid, that is, a structural unit derived from poly-L-lactic acid or a structural unit derived from poly-D-lactic acid is 100% by mass.

### <Unit (a') other than polylactic acid unit (a)>

The block structural unit (A) can contain, but does not have to contain, a unit (a') other than the polylactic acid unit (a).

The monomer that constitutes the unit (a') is not particularly limited as long as the effect of the present invention is not impaired.

The content percentage of the unit (a') in the block structural unit (A) is preferably 30% by mass or less, more preferably 20% by mass or less, further preferably 15% by mass or less, even further preferably 10% by mass or less.

### <Number average molecular weight of block structural unit (A)>

The number average molecular weight of the block structural unit (A) is preferably 1,000 to 100,000, more preferably 5,000 to 25,000, further preferably 8,200 to 15,000, particularly preferably 5,200 to 15,000. When the number average molecular weight is within the above numerical range, the emulsion tends to have a viscosity range in which productivity is excellent and the emulsion is easily handled as an emulsion.

When the block copolymer (I) has multiple block structural units (A), the number average molecular weight of the block structural unit (A) means the total of all blocks.

The number average molecular weight of the block structural unit (A) can be determined from the number average molecular weight of the block copolymer (I) and the mass content of the block structural unit (A) below.

### <<Block structural unit (B)>>

The block structural unit (B) contains a polyester unit (b) as a main component.

The "main component" means the unit with the highest content percentage among the units that constitute the block structural unit (B).

The content percentage of the polyester unit (b) in the block structural unit (B) is preferably 50% by mass or more, more preferably 70% by mass or more, further preferably 80% by mass or more, even further preferably 85% by mass or more, particularly preferably 90% by mass or more, and can be 100% by mass. There is no limit on the upper limit of the polyester unit (b) contained in the block structural unit (B), and the upper limit is, for example, 100% by mass or less.

From the viewpoint of exhibition of even better biodegradability, the polyester unit (b) preferably contains a unit derived from an aliphatic diol (b1) and an aliphatic dicarboxylic acid (b2). Specifically, the polyester unit (b) preferably contains a unit derived from a polyester obtained by reacting the aliphatic diol (b1) and the aliphatic dicarboxylic acid (b2). The polyester unit (b) can contain, but does not have to contain, a unit derived from a monomer other than the aliphatic diol (b1) and the aliphatic dicarboxylic acid (b2).

The monomer other than the aliphatic diol (b1) and the aliphatic dicarboxylic acid (b2) is not particularly limited as long as the effect of the present invention is not impaired.

The total amount of the aliphatic diol (b1) and the aliphatic dicarboxylic acid (b2) in the polyester unit (b) is preferably 90 mol% or more, more preferably 95 mol% or more, further preferably 99 mol% or more, and can be 100 mol%.

### <Aliphatic diol (b1)>

From the viewpoint of exhibition of excellent hydrolysis resistance, the aliphatic diol (b1) preferably has 5 or more, more preferably has 6 or more carbon atoms, and from the viewpoint of exhibition of even better biodegradability, the aliphatic diol (b1) preferably has 10 or less, more preferably has 9 or less, further preferably has 8 or less, particularly preferably 7 or less carbon atoms.

From the viewpoint of suppression of the crystallization of the block structural unit (B) and exhibition of even better biodegradability, and from the viewpoint of improvement of the hydrolysis resistance of the block structural unit (B) as an emulsion, the aliphatic diol (b1) preferably has an alkyl group as a branched chain. That is, the polyester unit (b) contains a unit derived from the aliphatic diol (b1) and the aliphatic dicarboxylic acid (b2), and the aliphatic diol (b1) preferably has an alkyl group as a branched chain.

The "branched chain" in the aliphatic diol (b1) herein refers to a partial structure that is branched from the "main chain" in the aliphatic diol (b1) and in which no hydroxy group is attached to the end.

The "main chain" in the aliphatic diol (b1) refers to a partial structure which is a molecular chain that is composed of two hydroxy groups on both ends in the molecule and multiple atoms, preferably carbon atoms, that connect between the two hydroxy groups. Therefore, at both ends of the "main chain" in the aliphatic diol (b1), two hydroxy groups in the aliphatic diol (b1) are located.

Presumably, when the aliphatic diol (b1) has a branched chain that is an alkyl group, the block structural unit (B) is likely to become an amorphous polymer, microorganisms can more easily enter the polymer structure during biodegradation, and the biodegradability become even better. However, being an amorphous polymer is only one factor that influences biodegradability. This is because presumably biodegradation occurs through a combination of various factors such as whether microorganisms recognize the amorphous structure as food, whether enzymes and microorganisms are likely to approach the amorphous structure, steric hindrance of the main chain, melting point, and crystallinity. Therefore, being an amorphous polymer does not necessarily mean that the effect of the present invention is obtained.

When the aliphatic diol (b1) has an alkyl group as a branched chain, the "carbon number" of the aliphatic diol (b1) is the total carbon number of the aliphatic diol (b1) including the number of carbon atoms that form the alkyl group.

In the aliphatic diol (b 1), the number of branched chains is preferably one or two, more preferably one. The branched chain is preferably a methyl group, an ethyl group, and a propyl group, more preferably a methyl group and an ethyl group, further preferably a methyl group. When the aliphatic diol (b1) has multiple branched chains, the branched chains can be the same, or different.

From the viewpoint of easy reaction with dicarboxylic acid and easy production of a triblock copolymer, it is preferred that the branched chain of the aliphatic diol (b1) be located apart from the hydroxy group at least γ position or more and be a methyl group, which has small steric hindrance. In addition, from the viewpoint of even better biodegradability, it is preferred that the aliphatic diol (b1) have a hydroxy group at both ends of the main chain.

Examples of the aliphatic diol (b1) having 5 or more and 10 or less carbon atoms and an alkyl group as a branched chain include 2,2-dimethyl-1,3-propanediol, 2-ethyl-1,3-propanediol, 2-methyl-1,3-propanediol, 2-ethyl-2-methyl-1,3-propanediol, 2,2-dimethyl-1,3-propanediol, 2-butyl-2-ethyl-1,3-propanediol, 2-methyl-1,4-butanediol, 1,2-pentanediol, 1,3-pentanediol, 2,3-pentanediol, 2,4-pentanediol, 2-methyl-2,4-pentanediol, 1,4-pentanediol, 2-methyl-1,5-pentanediol, 3-methyl-1,5-pentanediol, 2-methyl-2,4-pentanediol, 2-ethyl-1,5-pentanediol, 2,4-dimethyl-1,5-pentanediol, 2,4-diethyl-1,5-pentanediol, 1,2-hexanediol, 1,3-hexanediol, 1,4-hexanediol, 1,5-hexanediol, 2-ethyl-1,6-hexanediol, 2-methyl-1,8-octanediol, 2,7-dimethyl-1,8-octanediol, and 2-methyl-1,9-nonanediol. The aliphatic diol (b1) is preferably 3-methyl-1,5-pentanediol, 2-methyl-1,3-propanediol, and 2,4-diethyl-1,5-pentanediol, more preferably 3-methyl-1,5-pentanediol.

The aliphatic diol (b1) can be used alone or in combination of two or more types.

### <Aliphatic dicarboxylic acid (b2)>

From the viewpoint of exhibition of excellent hydrolysis resistance, the aliphatic dicarboxylic acid (b2) preferably has 4 or more, more preferably has 5 or more, further preferably has 6 or more carbon atoms, and from the viewpoint of exhibition of even better biodegradability, the aliphatic dicarboxylic acid (b2) preferably has 12 or less, more preferably has 10 or less, further preferably has 8 or less carbon atoms.

Examples of the aliphatic dicarboxylic acid (b2) having 4 or more and 12 or less carbon atoms include succinic acid, glutaric acid, adipic acid, pimeric acid, suberic acid, azelaic acid, sebacic acid, undecanedioic acid, and decandicarboxylic acid. The aliphatic dicarboxylic acid (b2) is preferably succinic acid, adipic acid, and sebacic acid, more preferably adipic acid and sebacic acid, further preferably adipic acid.

Aliphatic dicarboxylic acid (b2) can be used alone or in combination of two or more types.

### <Preferred combination of aliphatic diol (b1) and aliphatic dicarboxylic acid (b2)>

From the viewpoint of exhibition of even better biodegradability, a combination of 3-methyl-1,5-pentanediol and adipic acid, a combination of 2-methyl-1,3-propanediol and succinic acid, and a combination of 2,4-diethyl-1,5-pentanediol and adipic acid are examples of preferred embodiments, and a combination of 3-methyl-1,5-pentanediol and adipic acid is one example of a more preferred embodiment.

### <Ratio of aliphatic diol (b1) to aliphatic dicarboxylic acid (b2)>

The loading molar ratio [aliphatic diol (b1)/aliphatic dicarboxylic acid (b2)] in reaction of the aliphatic diol (b1) and the aliphatic dicarboxylic acid (b2)] is preferably 1.4/1 to 1/1.4, more preferably 1.2/1 to 1/1.2, further preferably 1.15/1 to 1/1.15.

### <Unit (b') other than polyester unit (b)>

The block structural unit (B) can contain a unit (b') other than the polyester unit (b).

The monomer that constitutes the unit (b') is not particularly limited as long as the effect of the present invention is not impaired.

The content percentage of the unit (b') in the block structural unit (B) is preferably 50% by mass or less, more preferably 30% by mass or less, further preferably 20% by mass or less, even further preferably 15% by mass or less, particularly preferably 10% by mass or less.

### <Number average molecular weight of block structural unit (B)>

The number average molecular weight of the block structural unit (B) is preferably 2,500 or more, more preferably 4,000 or more, and further preferably 5,000 or more. The number average molecular weight of the block structural unit (B) is preferably less than 100,000, more preferably less than 50,000, further preferably less than 30,000, even further preferably less than 20,000, particularly preferably less than 15,000, most preferably less than 10,000.

When the number average molecular weight is within the above numerical range, the block copolymer (I) tends to be excellent in productivity.

The number average molecular weight of the block structural unit (B) can be determined by gel permeation chromatography (GPC), and specifically can be measured by the method described in the Examples.

### <<Structural unit percentage>>

The block structural unit (A) is preferably 5% by mass or more, more preferably 15% by mass or more, further preferably 25% by mass or more, particularly preferably 35% by mass or more based on a total of 100% by mass of the block structural unit (A) and the block structural unit (B).

The block structural unit (A) is preferably 95% by mass or less, more preferably 85% by mass or less, further preferably 75% by mass or less, particularly preferably 60% by mass or less based on a total of 100% by mass of the block structural unit (A) and the block structural unit (B).

When the percentage of the block structural unit (A) is 5% by mass or more, the handling property of the block copolymer (I) tends to be even better. When the percentage of the block structural unit (A) is 95% by mass or less, the block copolymer (I) tends to be excellent in flexibility, biodegradability and the like.

From the viewpoint of the handling property, the percentage of the block structural unit (A) is more preferably 10% by mass or more, further preferably 15% by mass or more. From the viewpoint of flexibility, biodegradability and the like, the percentage of the block structural unit (A) is more preferably 80% by mass or less, further preferably 75% by mass or less, even further preferably 70% by mass or less, particularly preferably 60% by mass or less.

The percentage of the block structural unit (A) can be determined by ¹H-NMR, and specifically can be measured by the method described in the Examples.

The total of the content percentages of the block structural unit (A) and the block structural unit (B) in the block copolymer (I) is preferably 90% by mass or more, more preferably 95% by mass or more, and can be 100% by mass. There is no limit on the upper limit of the total of the content percentages of the block structural unit (A) and the block structural unit (B) in the block copolymer (I), and the upper limit is, for example, 100% by mass or less.

The block copolymer (I) can contain, but does not have to contain, a unit other than the block structural unit (A) and the block structural unit (B).

The unit other than the block structural unit (A) and the block structural unit (B) is not particularly limited as long as the effect of the present invention is not impaired.

The content percentage of the unit other than the block structural unit (A) and the block structural unit (B) in the block copolymer (I) is preferably 10% by mass or less, more preferably 5% by mass or less.

### <<Number average molecular weight of block copolymer (I)>>

From the viewpoint of the handling property and the hydrolysis resistance, the number average molecular weight of the block copolymer (I) is preferably 5,000 or more, more preferably 8,000 or more, further preferably 10,000 or more, and from the viewpoint of productivity, the number average molecular weight of the block copolymer (I) is preferably less than 200,000, more preferably less than 100,000, further preferably less than 60,000, even further preferably 50,000 or less, particularly preferably 40,000 or less, most preferably 20,000 or less.

The number average molecular weight of the block copolymer (I) can be determined by gel permeation chromatography (GPC), and specifically can be measured by the method described in the Examples.

### <<Bonding form of block copolymer (I)>

The bonding form of the block copolymer (I) is preferably triblock type and diblock type, and triblock type is more preferable. The block copolymer (I) can be a mixture of triblock type and diblock type. Specifically, the bonding form is preferably [block structural unit (A)]-[block structural unit (B)]-[block structural unit (A)].

### <Dispersant (II)>

The dispersant (II) is not particularly limited as long as an emulsion containing the block copolymer (I) can be obtained and the effect of the present invention is not impaired.

As the dispersant (II), for example, a water-soluble polymer, a surfactant, and the like can be used.

Examples of the water-soluble polymer include vinyl alcohol polymers such as polyvinyl alcohol, methylcellulose, ethylcellulose, hydroxyethylcellulose, carboxymethylcellulose, sodium polyacrylate, and sodium polymethacrylate.

Examples of the surfactant include nonionic surfactants such as sorbitan monolaurate, polyoxyethylene sorbitan monolaurate, polyoxyethylene-coconut fatty acid glyceryl, polyoxyethylene-castor oil, polyglycerin oleic acid ester, polyoxyethylene-laurylamine, and tetraoleic acid polyoxyethylene sorbitt; anionic surfactants such as alkylbenzene sulfonates such as sodium dodecyl benzene sulfonate, alkyl sulfates such as sodium dodecyl sulfate and sodium lauryl sulfate, sodium N-cocoyl methyltaurine, sodium di-2-ethylhexyl sulfosuccinate, sodium 2-ethylhexyl sulfate, and α-sulfo fatty acid methyl ester sodium salt; cationic surfactants such as benzalkonium chloride, dodecyltrimethylammonium chloride, tetradecylamine acetate, didecyldimethylammonium chloride, and tetradecyldimethylbenzylammonium chloride; and amphoteric surfactants such as palm oil dimethylaminoacetic acid betaine, palm oil fatty acid amidopropyl dimethylaminoacetic acid betaine, lauryl diaminoethylglycine sodium, and monosodium lauryl aminodiacetate.

From the viewpoint of improvement of dispersion stability and exhibition of even better biodegradability, the dispersant (II) is preferably a water-soluble polymer and an anionic surfactant, more preferably a water-soluble polymer.

From the viewpoint of improvement of dispersion stability and exhibition of even better biodegradability, the water-soluble polymer is preferably a vinyl alcohol polymer.

From the viewpoint of improvement of dispersion stability and exhibition of even better biodegradability, the anionic surfactant is preferably an alkylbenzene sulfonate, more preferably sodium dodecylbenzene sulfonate.

When a vinyl alcohol polymer is used as the dispersant (II), the saponification degree of the vinyl alcohol polymer is preferably 60 mol% or more, more preferably 70 mol% or more, further preferably 80 mol% or more, particularly preferably 85 mol% or more. The upper limit is preferably 100 mol% or less, more preferably 99 mol% or less, more preferably 98 mol% or less, further preferably 95 mol% or less, particularly preferably 90 mol% or less.

The saponification degree can be measured, for example, by the measuring method of saponification degree described in JIS-K6726 (1994). From the viewpoint of emulsifying ability, the vinyl alcohol polymer is preferably a partial saponification type.

When a vinyl alcohol polymer is used as the dispersant (II), the viscosity in the 4% by mass aqueous solution (20°C) of the vinyl alcohol polymer is preferably 3 to 120 mPa·s, more preferably 4 to 70 mPa·s, further preferably 8 to 60 mPa·s, particularly preferably 20 to 50 mPa·s.

The viscosity can be measured by the measuring method of viscosity described in JIS-K6726 (1994).

### <Dispersion medium>

The dispersion medium is preferably an aqueous medium containing water as a main component. The aqueous medium containing water as a main component can contain a water-soluble organic solvent (alcohols, ketones, and the like) that is soluble in water in any percentage. The "aqueous medium containing water as a main component" herein means a dispersion medium containing 50% by mass or more of water. From the viewpoint of cost and environmental load, the dispersion medium is preferably an aqueous medium containing 90% by mass or more of water, more preferably water.

From the viewpoint of productivity, handling property, and dispersion stability, the content percentage of the dispersion medium in the emulsion is preferably 50% by mass or more, more preferably 65% by mass or more, further preferably 75% by mass or more, even further preferably 80% by mass or more, and preferably 99% by mass or less, more preferably 97% by mass or less, further preferably 95% by mass or less.

### <Component other than block copolymer (I), dispersant (II), and dispersion medium>

The emulsion can contain a component other than the block copolymer (I), the dispersant (II), and the dispersion medium.

Examples of the component other than the block copolymer (I), the dispersant (II), and the dispersion medium include a polymer other than the block copolymer (I), a coloring agent (pigment or dye), an antifoaming agent, an antioxidant, and an ultraviolet absorber.

The content percentage of the component other than the block copolymer (I), the dispersant (II), and the dispersion medium in the emulsion is preferably 10% by mass or less, more preferably 5% by mass or less, further preferably 3% by mass or less.

### <Percentage of block copolymer (I) and dispersant (II)>

From the viewpoint of the active ingredient, the block copolymer (I) is preferably 50% by mass or more, more preferably 60% by mass or more, further preferably 65% by mass or more, even further preferably 70% by mass or more, particularly preferably 75% by mass or more based on a total of 100% by mass of the block copolymer (I) and the dispersant (II), and from the viewpoint of improvement of dispersion stability and viscosity range of easy handling, the block copolymer (I) is 99% by mass or less, more preferably 97% by mass or less, further preferably 96% by mass or less, further preferably 90% by mass or less, particularly preferably 85% by mass or less. That is, the block copolymer (I) is preferably 50 to 99% by mass, more preferably 60 to 97% by mass, further preferably 65 to 96% by mass, even further preferably 70 to 90% by mass, particularly preferably 75 to 85% by mass based on a total of 100% by mass of the block copolymer (I) and the dispersant (II).

From the viewpoint of improvement of dispersion stability and viscosity range of easy handling, the dispersant (II) is preferably 1% by mass or more, more preferably 3% by mass or more, further preferably 4% by mass or more, even further preferably 5% by mass or more, particularly preferably 10% by mass or more, most preferably 15% by mass or more, and from the viewpoint of increasing productivity and the amount of the active ingredient, the dispersant (II) is preferably 50% by mass or less, more preferably 40% by mass or less, further preferably 35% by mass or less, further preferably 30% by mass or less, particularly preferably 28% by mass or less, most preferably 25% by mass or less based on a total of 100% by mass of the block copolymer (I) and the dispersant (II). That is, the dispersant (II) is preferably 1 to 50% by mass, more preferably 3 to 40% by mass, further preferably 4 to 35% by mass, even further preferably 5 to 30% by mass, particularly preferably 10 to 28% by mass, most preferably 15 to 25% by mass based on a total of 100% by mass of the block copolymer (I) and the dispersant (II).

From the viewpoint of increasing the amount of the active ingredient, the total of the content percentages of the block copolymer (I) and the dispersant (II) in the emulsion is preferably 1% by mass or more, more preferably 3% by mass or more, further preferably 5% by mass or more, and from the viewpoint of obtaining an emulsion having a viscosity that achieves easy handling, the total of the content percentages of the block copolymer (I) and the dispersant (II) in the emulsion is preferably 50% by mass or less, more preferably 30% by mass or less, further preferably 20% by mass or less. That is, the total of the content percentages of the block copolymer (I) and the dispersant (II) in the emulsion is preferably 1 to 50% by mass, more preferably 3 to 30% by mass, further preferably 5 to 20% by mass.

### [Solid content in emulsion]

The solid content in the emulsion is preferably 1 to 50% by mass, more preferably 3 to 30% by mass, further preferably 5 to 20% by mass. When the solid content in the emulsion is within the above range, even better dispersion stability tends to be obtained.

The solid content in the emulsion means the value obtained by measuring the residue obtained by heating and drying the emulsion at 140°C until no weight change occurs with a drying-by-heating type moisture meter.

From the viewpoint of the active ingredient, the total of the content percentages of the block copolymer (I) and the dispersant (II) in the solid content in the emulsion is preferably 70% by mass or more, more preferably 80% by mass or more, further preferably 85% by mass or more, even further preferably 90% by mass or more, and can be 100% by mass.

### [Particle size of emulsion]

From the viewpoint of dispersion stability, the emulsion preferably has a particle size of 100 to 1,000 nm, more preferably has a particle size of 130 to 800 nm, further preferably has a particle size of 150 to 600 nm, even further preferably has a particle size of 180 to 400 nm, particularly preferably has a particle size of 200 to 350 nm.

In the present specification, the "particle size" refers to the average particle size measured with the dynamic light scattering measuring apparatus below.

### [Long-term dispersion stability of emulsion]

From the viewpoint of long-term storage property, regarding the dispersion stability of the emulsion, the resin preferably does not settle for 2 weeks or more, more preferably does not settle for 1 month or more, further preferably does not settle for 3 months or more at 23°C.

In the present specification, the "long-term dispersion stability" means those obtained by evaluation by the method described in "(7) Long-term dispersion stability of emulsion" in the Examples.

### [Hydrolysis resistance of block copolymer (I) in emulsion]

When the block copolymer (I) in the emulsion hydrolyzes over time, the number average molecular weight of the block copolymer (I) decreases. The higher the hydrolysis resistance of the block copolymer (I) is, the more the decrease of the number average molecular weight (Mn) over time is suppressed.

The retention rate of the number average molecular weight (Mn) determined by the following formula can be the index of the hydrolysis resistance of the block copolymer (I) in the emulsion.

The retention rate of the number average molecular weight (Mn) = (the number average molecular weight (Mn) of the block copolymer (I) after being allowed to stand for 1,000 hours under the condition of 23°C)/the number average molecular weight (Mn) of the block copolymer (I) within 6 hours from the emulsion production) × 100 (%)

From the viewpoint of long-term storage property, the retention rate of the number average molecular weight (Mn) of the block copolymer (I) in the emulsion is preferably 60% or more, more preferably 70% or more, further preferably 80% or more, particularly preferably 90% or more.

In this specification, the "number average molecular weight (Mn)" is a value determined by gel permeation chromatography (GPC), and specifically can be measured by the method described in the Examples.

### [Viscosity of emulsion]

From the viewpoint of handling property, the viscosity of the emulsion is preferably 10 to 1,000 mPa·s, more preferably 100 to 500 mPa·s, further preferably 200 to 350 mPa·s.

In the present specification, the "viscosity" refers to the viscosity measured under the condition of 23°C with an E-type viscometer below.

### [Method for producing block copolymer (I)]

A known production method can be employed as the method of producing the block copolymer (I).

The known production method of the block copolymer (I) can be, for example, a method in which the polyester that constitutes the polyester unit (b) is synthesized and the polyester and lactide are polymerized.

The polyester can be synthesized by a known method. For example, the aliphatic diol (b1) and the aliphatic dicarboxylic acid (b2) can be reacted using an esterification catalyst (for example, tin octylate, tin chloride, tin oxide) to synthesize the polyester.

In the polymerization reaction of the polyester and lactide, a ring-opening polymerization catalyst (for example, tin octylate, tin chloride, tin oxide) is preferably used. Examples of the polymerization reaction include solution polymerization, melt polymerization, and interfacial polycondensation, and all can be performed under known polymerization reaction conditions.

Another known production method of the block copolymer (I) can be, for example, a method in which the polylactic acid that constitutes the polylactic acid unit (a) and the polyester that constitutes the polyester unit (b) are separately synthesized, and the polylactic acid and the polyester are reacted.

The polylactic acid can be synthesized by a known method. For example, the polylactic acid can be synthesized by reacting lactic acid by direct condensation, and the polylactic acid can be synthesized by reacting lactide by ring-opening polymerization.

In polymerization of the polylactic acid and the polyester, an esterification catalyst (for example, tin octylate, tin chloride, and tin oxide) is preferably used. Examples of the polymerization reaction include solution polymerization, melt polymerization, and interfacial polycondensation, and all can be performed under known polymerization reaction conditions.

### [Method for producing emulsion]

A known production method can be employed as the method for producing the emulsion.

The emulsion can be obtained by dispersing the block copolymer (I) in the dispersion medium, for example, by the pressure dispersion method in which the block copolymer (I), the dispersant (II), and the dispersion medium are simultaneously charged in a sealed tank having a stirring apparatus, and pressurized while heating and stirring to disperse the block copolymer (I), the direct dispersion method in which the block copolymer (I) is added, stirred, and dispersed into a heated dispersion medium containing the dispersant (II) which is held under normal pressure or pressure, a method in which the block copolymer (I) dissolved in an organic solvent is added, stirred, and dispersed into a dispersion medium containing the dispersant (II), or the phase inversion method in which the block copolymer (I) is heated and melted, and the dispersion medium is added and stirred into the heated and melted block copolymer (I) to disperse the block copolymer (I) into the dispersion medium. In addition to the methods above, methods by which an aqueous dispersion of a biodegradable resin can be obtained can be appropriately employed.

From the viewpoint of easy synthesis, the method for producing the emulsion is preferably a method in which the block copolymer (I) dissolved in an organic solvent is added, stirred, and dispersed into a dispersion medium containing the dispersant (II), that is, the method preferably has the step of dispersing the block copolymer (I) dissolved in an organic solvent into an aqueous medium in presence of the dispersant (II).

A dispersing apparatus such as a high pressure homogenizer can be used in combination, if necessary, in the preparation of the emulsion.

From the viewpoint of environmental load, the method preferably further has the step of removing the organic solvent after the step of dispersing.

In the step of removing the organic solvent, the organic solvent is removed, for example, by heating the solution obtained in the step of dispersing.

If necessary, a component of a component other than the block copolymer (I), the dispersant (II), and the dispersion medium can be added in advance to the dispersion medium before dispersing the block copolymer (I), can be added together when the block copolymer (I) is dispersed, or can be added after the block copolymer (I) is dispersed.

### Examples

Hereinafter, the present invention will be specifically described with reference to Examples and Comparative Examples, but the present invention is not limited thereto.

The physical properties of the block copolymer (I) and polymers such as polylactic acid in Examples and Comparative Examples were measured or evaluated by the following method.

### (1) Number average molecular weight (Mn)

Each number average molecular weight (Mn) (also referred to as Mn of the polymer) of the block copolymer (I) and the polymer in the emulsion within 6 hours after emulsion production was determined in terms of standard polystyrene by gel permeation chromatography (GPC). The Mn of the block structural unit (B) (also referred to as Mn of the structural unit (B)) was determined from the Mn of the block copolymer (I) and the mass content of the block structural unit (B).

### <Measurement condition of GPC>

Apparatus: GPC apparatus "HLC-8220" manufactured by TOSOH CORPORATION
Separation column: "TSKgel SuperMultiporeHZ-M (column diameter = 4.6 mm, column length = 15 cm)" manufactured by TOSOH CORPORATION (used with two column connected in series)
Eluent: tetrahydrofuran (THF)
Eluent flow rate: 0.35 mL/min
Column temperature: 40°C
Detection method: differential refractive index (RI)
Injection volume: 10 µL
Concentration: 1 mg/1 mL ((block copolymer (I) or polylactic acid)/THF)

### (2) (A)/(B) (mass ratio) (mass of block structural unit (A) containing polylactic acid unit (a) as main component/mass of block structural unit (B) containing polyester unit (b) as main component)

The (A)/(B) (mass ratio) of the block copolymers was calculated by ¹H-NMR. The molar ratio of the block structural unit (A) to the block structural unit (B) was calculated from the area ratio of the signal around 5.2 ppm derived from the polylactic acid unit (a) to the signal around 0.9 ppm derived from the structural unit (B) containing the polyester unit (b) as the main component of the obtained spectrum. The (A)/(B) (mass ratio) was calculated by multiplying the molar ratio by the molecular weight of the block structural unit and taking the obtained value as the mass ratio.

### <Measurement condition of ¹H-NMR>

Apparatus: nuclear magnetic resonance apparatus "JNM-ECX400" manufactured by JEOL Ltd.
Solvent: deuterated chloroform
Measuring temperature: 50°C
Accumulation count: 1024 times

### (3) Biodegradability (compost)

The emulsion was cast to a film thickness of 100 µm, air-dried for 1 week, dried in a vacuum dryer under the condition of 40°C for 8 hours, and then dried under the condition of 105°C for 10 minutes, and the biodegradability in the compost was measured according to the method according to ISO 14855-2:2018. Regarding the decomposition rate after 15 days, the biodegradability in the compost was measured according to the following evaluation criteria.
A: The decomposition rate is 20% by mass or more
B: The decomposition rate is 10% by mass or more and less than 20% by mass
C: The decomposition rate is 5% by mass or more and less than 10% by mass
F: The decomposition rate is less than 5% by mass

### (4) Biodegradability (activated sludge)

The emulsion was cast to a film thickness of 100 µm, air-dried for 1 week, dried in a vacuum dryer under the condition of 40°C for 8 hours, and dried under the condition of 105°C for 10 minutes, and the biodegradability in the activated sludge was measured according to the method according to ISO 14851:2019. Regarding the decomposition rate after 90 days, the biodegradability in the activated sludge was evaluated according to the following evaluation criteria.
A: The decomposition rate is 30% by mass or more
B: The decomposition rate is 10% by mass or more and less than 30% by mass
F: The decomposition rate is less than 10% by mass

### (5) Particle size

The emulsion was diluted 100-fold with ion-exchanged water, and the median diameter (particle size) of particles present in the emulsion was measured by dynamic light scattering.

### <Measurement condition of median diameter>

Apparatus: nanoparticle analyzer "nano Partica SZ-100" manufactured by HORIBA, Ltd.

### (6) Dispersion stability

After the emulsion was produced, the emulsion was allowed to stand under the condition of 23°C for 1 day, then the presence or absence of precipitate was visually checked, and the dispersion stability of the emulsion was evaluated according to the following evaluation criteria.
A: No precipitation is observed.
B: Precipitation is observed.

### (7) Long-term dispersion stability of emulsion

After the emulsion was produced, the emulsion was allowed to stand under the condition of 23°C, the presence or absence of precipitate at the bottom of the container was visually checked every week, and the long-term dispersion stability of the emulsion was evaluated according to the following evaluation criteria.
A: No precipitation is observed for 3 months or more after the emulsion was allowed to stand.
B: Precipitation is observed in less than 1 to 3 months after the emulsion was allowed to stand.
C: Precipitation is observed in less than 2 weeks to 1 month after the emulsion was allowed to stand.
F: Precipitation is observed in less than 2 weeks after the emulsion was allowed to stand.

### (8) Hydrolysis resistance

After the emulsion was produced, the emulsion was allowed to stand under the condition of 23°C for 1,000 hours, then each number average molecular weight (Mn) (also referred to as Mn of polymer) of the block copolymer (I) and the polymer was determined by gel permeation chromatography (GPC) in terms of standard polystyrene. Subsequently, the retention rate of the number average molecular weight (Mn), which is an indicator of the hydrolysis resistance, was calculated by the following formula.

The retention rate of the number average molecular weight (Mn) = (the number average molecular weight (Mn) of the block copolymer (I) or the polymer after being allowed to stand for 1,000 hours under the condition of 23°C)/the number average molecular weight (Mn) of the copolymer (I) or the polymer determined in (1) above) × 100 (%)

From the calculated retention rate, the hydrolysis resistance of the emulsion was evaluated according to the following evaluation criteria.
A: The retention rate of the number average molecular weight (Mn) is 90% or more
B: The retention rate of the number average molecular weight (Mn) is 80% or more and less than 90%
C: The retention rate of the number average molecular weight (Mn) is 70% or more and less than 80%
D: The retention rate of the number average molecular weight (Mn) is 20% or more and less than 70%
F: The retention rate of the number average molecular weight (Mn) is less than 20%

The measurement conditions of the GPC were the same as those of the "(1) Number average molecular weight (Mn)" above.

### (9) Viscosity

One day after the emulsion was produced, the viscosity of the emulsion was measured at 23°C using an E-type viscometer (manufactured by TOKI SANGYO Co., Ltd). The viscosity of the emulsion was evaluated according to the following evaluation criteria.
A: 200 to 350 mPa·s
B: 100 to 500 mPa·s
C: 10 to 1,000 mPa·s
D: Unmeasurable because isolation or precipitation occurred, and the emulsion state was not uniform

Each block copolymer and polymer in Examples and Comparative Examples were produced by the following method. The compounds used in Examples and Comparative Examples were as follows.
3-Methyl-1,5-pentanediol (manufactured by KURARAY CO., LTD.)
Adipic acid (manufactured by Tokyo Chemical Industry Co., Ltd.)
Succinic acid (manufactured by Tokyo Chemical Industry Co., Ltd.)
Tin octylate (manufactured by Tokyo Chemical Industry Co., Ltd.)
Toluene (manufactured by Kishida Chemical Co., Ltd.)
L-lactide (manufactured by Tokyo Chemical Industry Co., Ltd.)
Methanol (manufactured by FUJIFILM Wako Pure Chemical Corporation)
2-Methyl-1,3-propanediol (manufactured by Tokyo Chemical Industry Co., Ltd.)
2,4-Diethyl-1,5-pentanediol (manufactured by Tokyo Chemical Industry Co., Ltd.)

### [Example 1]

To a flask equipped with a device capable of evaporating the liquid to be generated and a vacuum pump, 3-methyl-1,5-pentanediol and adipic acid were charged at the molar ratio of 3-methyl-1,5-pentanediol/adipic acid = 1.1/1, tin octylate was further added at 0.1% by mass relative to the total weight of 3-methyl-1,5-pentanediol and adipic acid, and the mixture was heated at 160°C for 3 hours under nitrogen atmosphere under normal pressure, and further heated at 220°C for 3 hours to be reacted while evaporating water. Then, the pressure was reduced to 2,000 Pa, the obtained product was reacted for 3 hours, then the pressure was reduced to 80 Pa, and the obtained product was reacted until the number average molecular weight reached 6,000 while appropriately checking the obtained product to synthesize a polymer composed of a structural unit (B') containing a polyester unit as the main component. After the reaction was completed, the pressure was returned to normal pressure, the temperature was decreased to 80°C, then toluene was added to dilute the polymer so that the solid content would be 40% by mass, and then the toluene solution above was charged into methanol in an amount of 2 times the total volume of the solution. The supernatant was discarded, and the same amount of methanol as the amount of the charged toluene solution was added again for washing. The supernatant was discarded, and the recovered insoluble matter was dried under the condition of a temperature of 40°C using a vacuum dryer to remove organic volatiles, thereby a polymer composed of a structural unit (B') containing the polyester unit (b) as the main component was obtained.

Toluene was added again to the purified polymer composed of the structural unit (B') to dilute the polymer so that the solid content in the toluene solution of the polymer composed of the structural unit (B') would be 33% by mass, and then 10% by mass of the weight of the added toluene was evaporated by increasing the temperature to 140°C to dehydrate the system.

Then, the toluene solution of the polymer composed of the structural unit (B') was cooled to 80°C, the polymer composed of the structural unit (B') and L-lactide were added so that the polymer composed of the structural unit (B')/L-lactide would be 50/50, and toluene in an amount corresponding to the evaporated weight was further added to adjust so that the solid content of the toluene solution of the polymer composed of the structural unit (B') and L-lactide would be 50% by mass. Then, when the temperature of the solution was raised to 100°C, 0.1% by mass of tin octylate relative to the polymer composed of the structural unit (B') was added, and the mixture was reacted for 4 hours to synthesize a block copolymer (I) including the block structural unit (A) containing the polylactic acid unit (a) as the main component and the block structural unit (B) containing the polyester unit (b) as the main component, and a toluene solution of the block copolymer (I) was obtained.

To this solution, toluene was further added to dilute the solution so that the solid content would be 40% by mass, and then the toluene solution having the solid content of 40% by mass was charged into methanol in an amount of 2 times the total volume of the solution to precipitate a solid. The supernatant methanol was discarded and the same amount of methanol as the amount of the charged toluene solution was added again for washing. The methanol was discarded, and the recovered solid was dried under the condition of 40°C using a vacuum dryer to remove organic volatiles, thereby a block copolymer (I) including the block structural unit (A) containing the polylactic acid unit (a) as the main component and the block structural unit (B) containing the polyester unit (b) as the main component was obtained.

The number average molecular weight (Mn) of the obtained block copolymer (I) was 12,000.

A polymer solution in which the obtained block copolymer (I) was dissolved in toluene at a concentration of 20% by mass and an aqueous solution in which "Kuraray Poval (TM) 22-88" (manufactured by KURARAY CO., LTD.) was diluted with water as a dispersant were mixed so that the content of the dispersant would be 30 phr relative to the block copolymer (I) and the solid content would be 10% by mass to obtain 400 g of a mixed liquid. The mixed liquid was stirred for 5 minutes under the condition of a peripheral speed of 17.5 m/s using a precision dispersion/emulsification machine "CLEARMIX" (manufactured by M Technique Co., Ltd.) to obtain a dispersion.

The dispersion was heated to a temperature of 85°C and toluene was removed by appropriately blowing nitrogen into the vapor phase part of the generated toluene vapor to obtain an emulsion containing the block copolymer (I) and the dispersant (II). The evaluation results of the biodegradability in activated sludge and in compost, particle size, and dispersion stability of the obtained emulsion are shown in Table 1-1.

### [Examples 2 and 3]

Each block copolymer (I) including the block structural unit (A) containing the polylactic acid unit (a) as the main component and the block structural unit (B) containing the polyester unit (b) as the main component was synthesized, and then an emulsion was obtained in the same manner as in Example 1 except that the number average molecular weight of the structural unit (B) was adjusted by adjusting the reaction time in the synthesis of the polymer composed of the structural unit (B') containing the polyester unit (b) as the main component, the mass ratio of the polymer composed of the structural unit (B') used to L-lactide was changed, and the content of the dispersant (II) relative to the block copolymer (I) was changed.

Measurements and evaluations above were performed for each obtained emulsion. The results are shown in Table 1-1.

### [Example 4]

A block copolymer (I) including the block structural unit (A) containing the polylactic acid unit (a) as the main component and the block structural unit (B) containing the polyester unit (b) as the main component was synthesized, and then an emulsion was obtained in the same manner as in Example 1 except that 2-methyl-1,3-propanediol was used instead of 3-methyl-1,5-pentanediol, succinic acid was used instead of adipic acid, the number average molecular weight of the structural unit (B) was adjusted by adjusting the reaction time in the synthesis of the polymer composed of the structural unit (B') containing the polyester unit (b) as the main component, and the content of the dispersant (II) relative to the block copolymer (I) was changed.

Measurements and evaluations above were performed for the obtained emulsion. The results are shown in Table 1-1.

### [Example 5]

A block copolymer (I) including the block structural unit (A) containing the polylactic acid unit (a) as the main component and the block structural unit (B) containing the polyester unit (b) as the main component was synthesized, and then an emulsion was obtained in the same manner as in Example 1 except that 2,4-diethyl-1,5-pentanediol was used instead of 3-methyl-1,5-pentanediol, the number average molecular weight of the structural unit (B) was adjusted by adjusting the reaction time in the synthesis of the polymer composed of the structural unit (B') containing the polyester unit (b) as the main component, and the content of the dispersant (II) relative to the block copolymer (I) was changed.

Measurements and evaluations above were performed for the obtained emulsion. The results are shown in Table 1-1.

### [Example 6]

A block copolymer (I) including the block structural unit (A) containing the polylactic acid unit (a) as the main component and the block structural unit (B) containing the polyester unit (b) as the main component was synthesized, and then an emulsion was obtained in the same manner as in Example 1 except that the number average molecular weight of the structural unit (B) was adjusted by adjusting the reaction time in the synthesis of the polymer composed of the structural unit (B') containing the polyester unit (b) as the main component, and the dilution concentration in the synthesis was appropriately changed to a concentration that is suitable for easy handling.

Measurements and evaluations above were performed for the obtained emulsion. The results are shown in Table 1-2.

### [Example 7]

A block copolymer (I) including the block structural unit (A) containing the polylactic acid unit (a) as the main component and the block structural unit (B) containing the polyester unit (b) as the main component was synthesized, and then an emulsion was obtained in the same manner as in Example 1 except that "NEOPELEX G-15" (manufactured by Kao Corporation) was used as a dispersant, and the content of the dispersant (II) relative to the block copolymer (I) was changed.

Measurements and evaluations above were performed for the obtained emulsion. The results are shown in Table 1-2.

### [Example 8]

An emulsion was obtained in the same manner as in Example 1 except that the operation to remove toluene by heating the dispersion was not performed in Example 1.

Measurements and evaluations above were performed for the obtained emulsion. The results are shown in Table 1-2.

### [Example 9]

A block copolymer (I) including the block structural unit (A) containing the polylactic acid unit (a) as the main component and the block structural unit (B) containing the polyester unit (b) as the main component was synthesized, and then an emulsion was obtained in the same manner as in Example 1 except that succinic acid was used instead of adipic acid, the number average molecular weight of the structural unit (B) was adjusted by adjusting the reaction time in the synthesis of the polymer composed of the structural unit (B') containing the polyester unit (b) as the main component, and the content of the dispersant (II) relative to the block copolymer (I) was changed.

Measurements and evaluations above were performed for the obtained emulsion. The results are shown in Table 1-2.

### [Example 10]

A block copolymer (I) including the block structural unit (A) containing the polylactic acid unit (a) as the main component and the block structural unit (B) containing the polyester unit (b) as the main component was synthesized, and then an emulsion was obtained in the same manner as in Example 1 except that 2-methyl-1,3-propanediol was used instead of 3-methyl-1,5-pentanediol, the number average molecular weight of the structural unit (B) was adjusted by adjusting the reaction time in the synthesis of the polymer composed of the structural unit (B') containing the polyester unit (b) as the main component, and the content of the dispersant (II) relative to the block copolymer (I) was changed.

Measurements and evaluations above were performed for the obtained emulsion. The results are shown in Table 1-2.

### [Comparative Example 1]

Under the condition of 200°C, 0.1% by mass of tin octylate was added to L-lactide and the mixture was reacted until the molecular weight reached 40,000 to obtain polylactic acid.

A polymer solution in which the obtained polylactic acid was dissolved in dichloromethane at a concentration of 20% by mass and an aqueous solution in which "NEOPELEX G-15" (manufactured by Kao Corporation) was dissolved in water as the dispersant (II) were mixed so that the content of the dispersant (II) would be 5 phr relative to the polylactic acid and the solid content would be 10% by mass to obtain 400 g of a mixed liquid. The mixed liquid was stirred for 5 minutes under the condition of a peripheral speed of 17.5 m/s using a precision dispersion/emulsification machine "CLEARMIX " (manufactured by M Technique Co., Ltd.) to obtain a dispersion.

The dispersion was heated to a temperature of 38°C and dichloromethane was removed by appropriately blowing nitrogen into the vapor phase part of the generated dichloromethane vapor to obtain an emulsion containing the polylactic acid and the dispersant.

Measurements and evaluations above were performed for the obtained emulsion. The results are shown in Table 2. The obtained emulsion had poor biodegradability. Presumably, this is because the polylactic acid does not have the structural unit (B).

### [Comparative Example 2]

The production of an emulsion was attempted in the same manner as in Example 1 except that no dispersant was used. However, the block copolymer could not be dispersed to form an emulsion, the particle size could not be measured, and the dispersion stability was also poor.

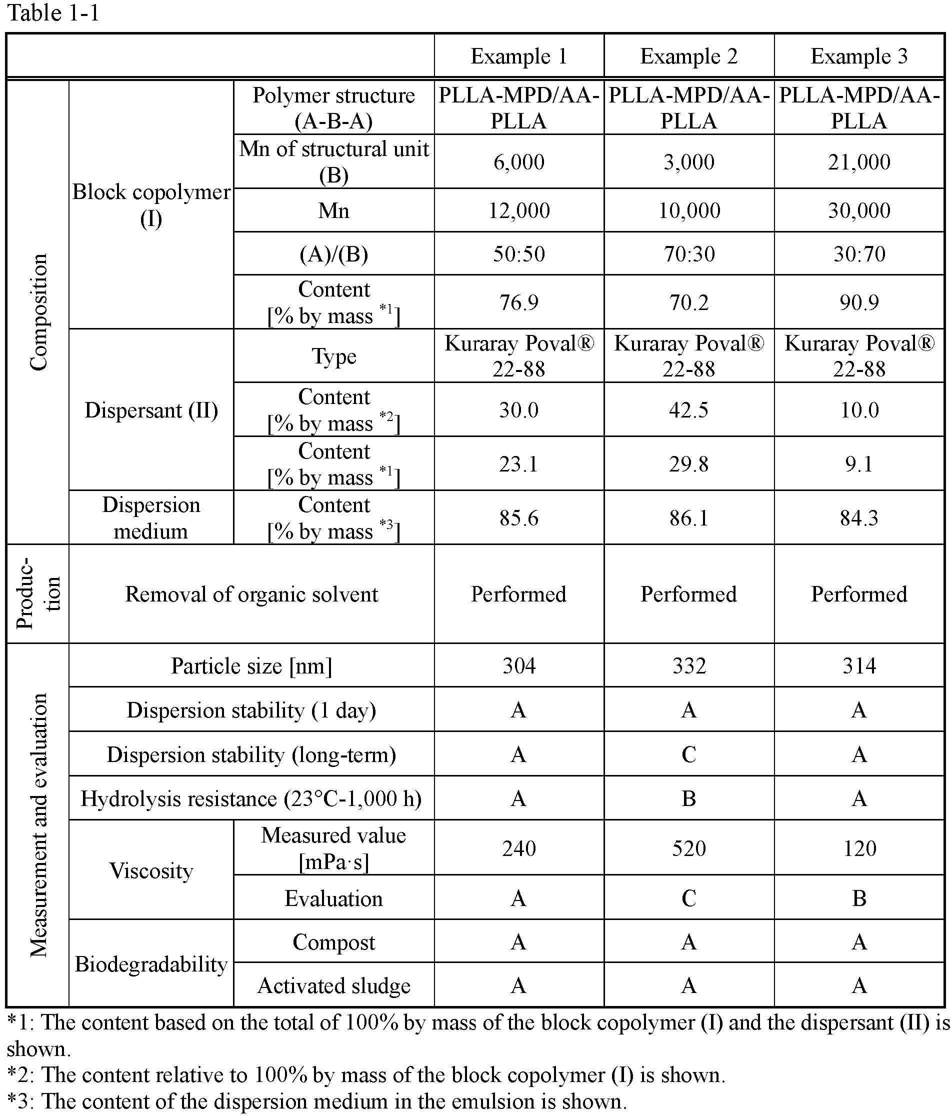

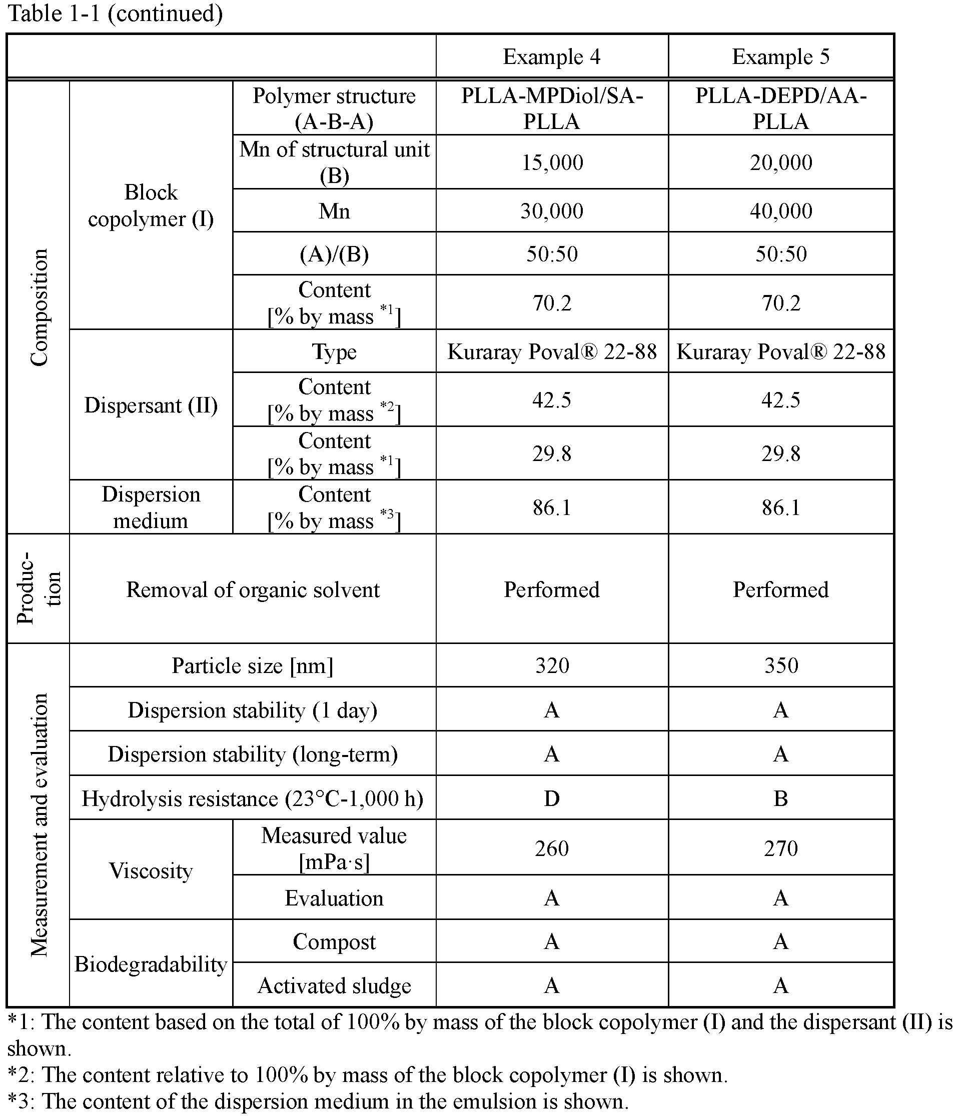

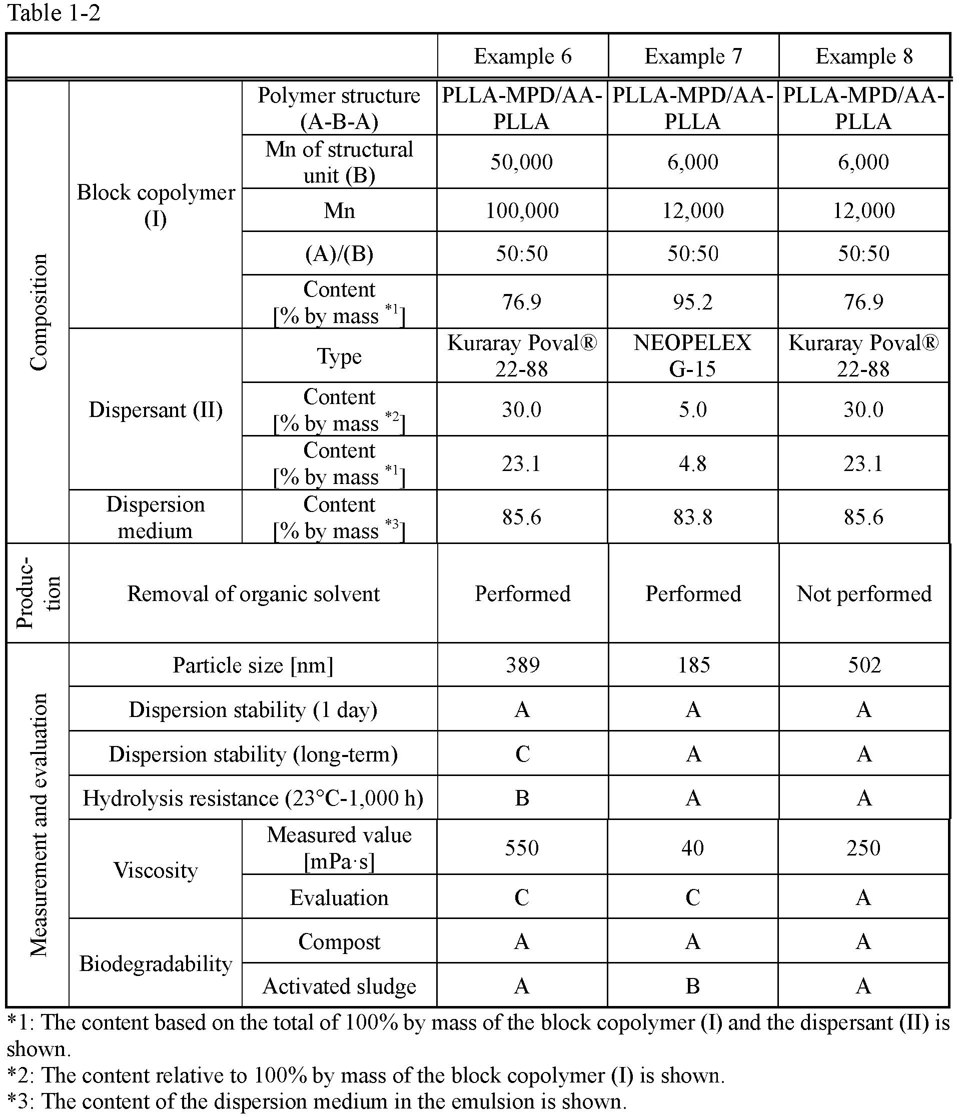

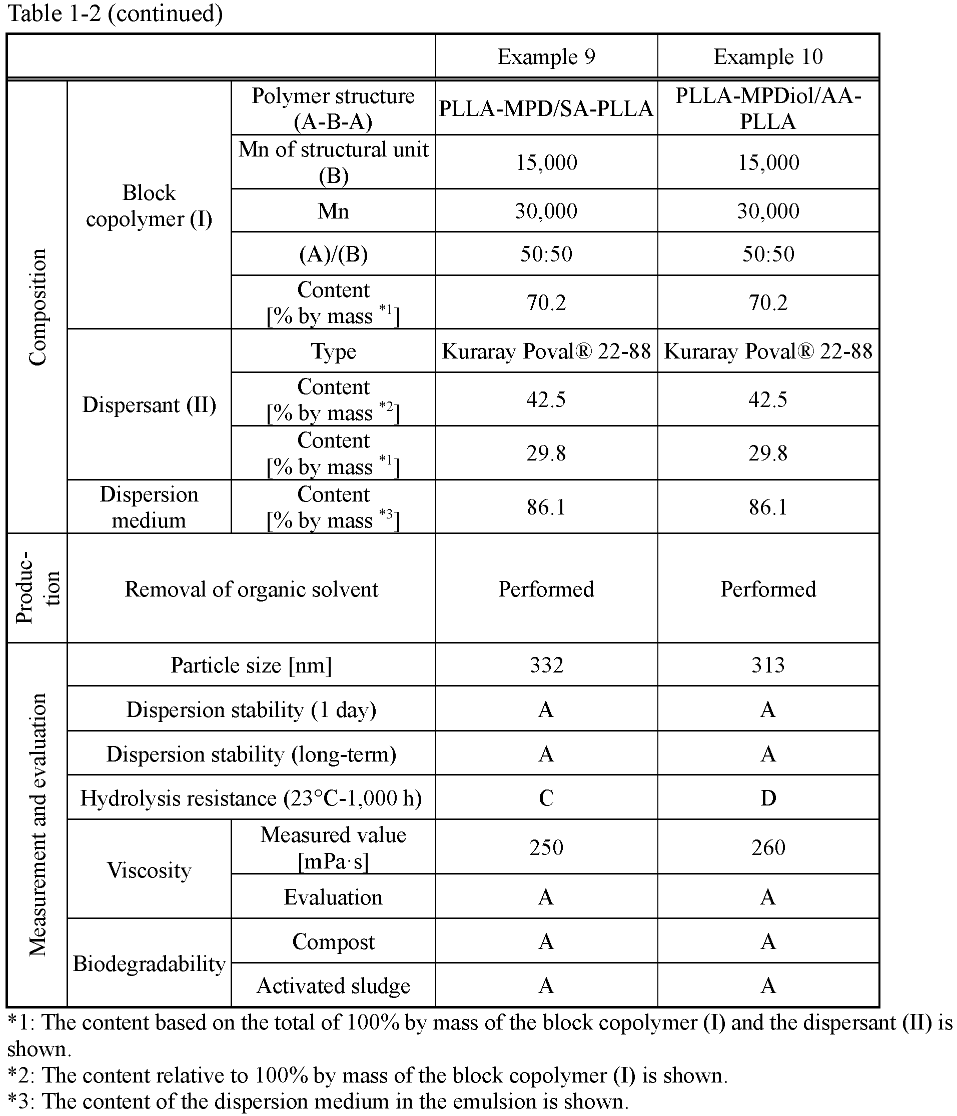

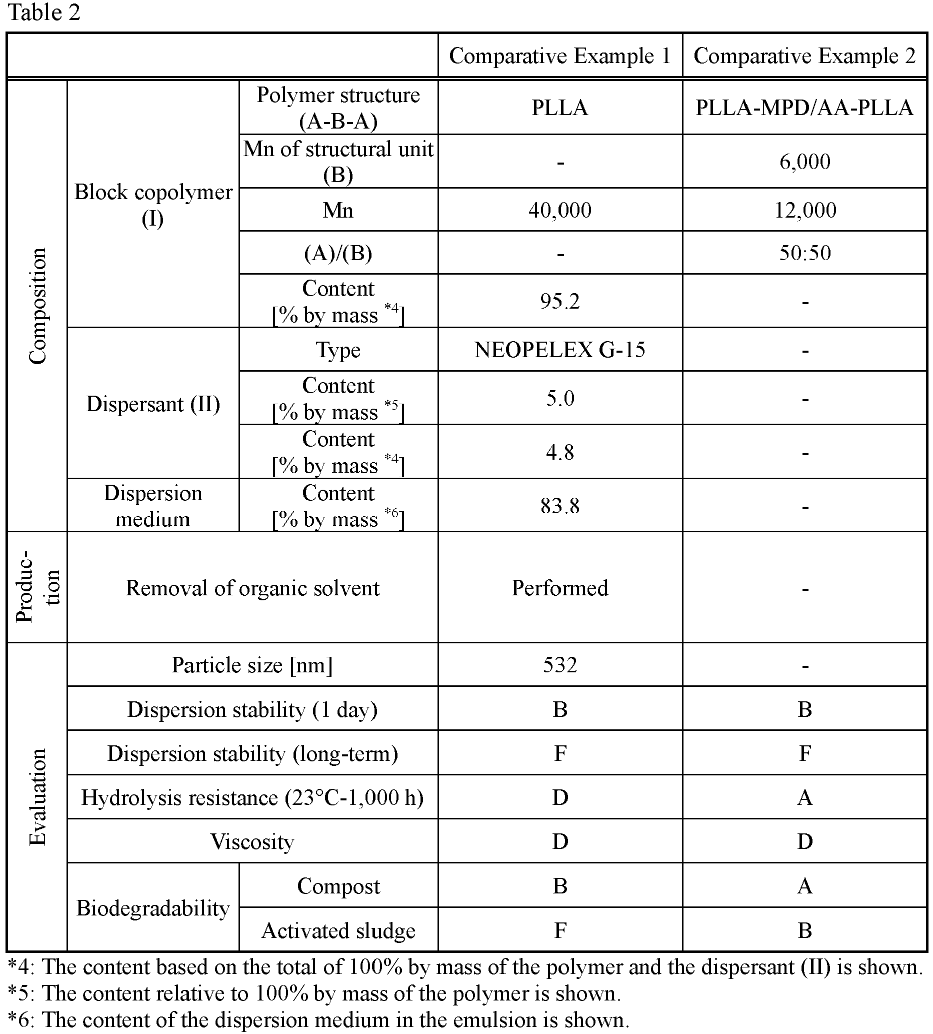

The abbreviations in Tables 1-1, 1-2, and 2 indicate the following compounds.
PLLA: poly-L-lactic acid
MPD: 3-methyl-1,5-pentanediol
DEPD: 2,4-diethyl-1,5-pentanediol
MPDiol: 2-methyl-1,3-propanediol
AA: adipic acid
SA: succinic acid

As shown in Examples, the emulsion of the present embodiment containing the block copolymer (I) containing the block structural unit (A) containing the polylactic acid unit (a) as the main component and the block structural unit (B) containing the polyester unit (b) as the main component, and the dispersant (II) has good biodegradability. Thus, the emulsion of the present embodiment has extremely high industrial utility.

## Claims

1. An emulsion comprising a block copolymer (I) and a dispersant (II), wherein the block copolymer (I) contains a block structural unit (A) containing a polylactic acid unit (a) as a main component and a block structural unit (B) containing a polyester unit (b) as a main component.

2. The emulsion according to claim 1, wherein the block copolymer (I) is 50% by mass or more and 99% by mass or less based on a total of 100% by mass of the block copolymer (I) and the dispersant (II).

3. The emulsion according to claim 1 or 2, wherein the polyester unit (b) contains a unit derived from an aliphatic diol (b1) and an aliphatic dicarboxylic acid (b2), and the aliphatic diol (b1) is a diol having an alkyl group as a branched chain.

4. The emulsion according to claim 3, wherein the aliphatic diol (b1) has 10 or less carbon atoms.

5. The emulsion according to claim 3 or 4, wherein the aliphatic diol (b1) has 5 or more carbon atoms.

6. The emulsion according to any one of claims 3 to 5, wherein the branched chain of the aliphatic diol (b1) is a methyl group.

7. The emulsion according to any one of claims 1 to 6, wherein the block structural unit (A) is 5% by mass or more and 95% by mass or less based on a total of 100% by mass of the block structural unit (A) and the block structural unit (B).

8. The emulsion according to any one of claims 1 to 7, wherein the dispersant (II) is a vinyl alcohol polymer.

9. The emulsion according to any one of claims 1 to 8, having a particle size of 100 to 1,000 nm.

10. A method for producing the emulsion according to any one of claims 1 to 9, comprising the step of:
dispersing the block copolymer (I) dissolved in an organic solvent in an aqueous medium in presence of the dispersant (II).

11. The method for producing the emulsion according to claim 10, further comprising the step of:
removing the organic solvent.
